# EUROPEAN PATENT APPLICATION

(11) **EP 3 473 129 A1**
(43) Date of publication of application: **24.04.2019**
(21) Application number: 17813606.5
(22) Date of filing: 15.06.2017
(51) Int. Cl.: A45C 5/02, A45C 5/04, A45C 5/03, B29C 70/34, B29C 70/50, B29C 70/54, B29C 70/06, B29C 70/68, B29K 105/08, B29L 31/00

(54) **MULTILAYER SHEET COMPRISING FABRIC AND RESIN, TRAVEL BAG CASE MADE THEREFEROM, AND APPARATUS FOR MANUFACTURING SAME**

(30) Priority: 16.06.2016 KR 20160075037; 01.12.2016 KR 20160162858
(71) Applicant: Carimax Corporation, Seongnam-si, Gyeonggi-do 13626 (KR)
(72) Inventor: KWON, Hyung Joo, Gwangju-si, Gyeonggi-do 12814 (KR)
(74) Representative: Crippa, Paolo Ernesto
(86) International application number: PCT/KR2017/006243
(87) International publication number: WO 2017/217783

(57) **Abstract**

According to a multilayer sheet of the present invention, since a first resin, a first fabric and a second resin are layered and coupled to each other and the first resin and the second resin are coupled by through-holes of the first fabric, the first resin and the second resin are uniformly absorbed and coated on the surface of the first fabric, and the first resin, the first fabric, and the second resin are closely coupled to each other, thereby enabling a unique color of the first fabric to be displayed on the exterior through the first resin and/or the second resin, a travel bag having very excellent compactness, tensile strength and impact strength to be manufactured, a travel bag having excellent quality to be provided even if manufacturing costs and manufacturing processes are decreased, and a travel bag capable of maximizing user convenience and the operability (mobility and the like) of the travel bag by remarkably reducing the weight to be provided.

## Description

### Technical Field

The present disclosure relates to a multilayer sheet, a case of a travel bag, and a method for manufacturing the same. More particularly, the present disclosure relates to a multilayer sheet constituting a raw material of a case of a travel bag in which articles are contained, a case configured by press-molding such a multilayer sheet, and a case manufacturing device.

### Background Art

Travel bags are used to store and protect articles for travel. Commonly used travel bags have casters and handles installed thereon. Travel bags are largely classified into hard cases and soft cases according to the material of the bag body (case).

Most soft cases are made of chemical fibers such as nylon, polyester, and the like, and have wires formed along the corners of the bag body in order to maintain the shape. Soft case travel bags have a drawback in that, if a wire is bent by an external impact, it is impossible to restore the same to the original condition.

Hard cases are the most prevalent type of cases on the current market. The bag body (case) itself is made of hard plastic such that the same can maintain the shape without a skeleton structure such as a wire. The bag body is both hard and elastic, thereby having an excellent function of protecting objects contained therein.

However, most conventional hard cases have a problem in that edges or corners thereof will be broken or recessed inward by impacts applied to the cases beyond the threshold of elastic restoration when the cases fall down or drop during a use or during a transportation while containing users' luggage. In such a case, restoration is practically impossible, and, even if restored, traces of fracture such as white lines or wrinkle marks are left permanently. Therefore, it has constantly been requested to develop a travel bag, the durability of which can be improved while allowing elastic deformation.

Meanwhile, Korean Registered Patent No. 10-1189901 (Registration Date: October 4, 2012) discloses a feature wherein a polypropylene resin composition is used to manufacture a travel bag. However, it is still requested to develop a travel bag having a new structure, in order to manufacture a hard case-type travel bag, the strength of which can be improved further.

### Detailed Description of the Invention

### Technical Problem

An aspect of the present disclosure is to provide a multilayer sheet, a case of a travel bag, and a case manufacturing device for manufacturing the same, wherein a fabric constituting the case of a travel bag and a plurality of layers made of thermoplastic resin, laminated on the fabric, are tightly laminated, thereby improving elasticity and durability, and the type of weaving of the fabric and the color impression thereof are naturally exposed to the outside while protecting the fabric.

Another aspect of the present disclosure is to provide a multilayer sheet, a case of a travel bag, and a case manufacturing device for manufacturing the same, wherein, compared with conventional travel bags made of polycarbonate (PC), acrylonitrile butadiene styrene (BS), polypropylene (PP), and the like, the rigidity and durability can be improved while reducing the manufacturing cost and decreasing the weight.

### Technical Solution

In accordance with an aspect of the present disclosure, there is provided a multilayer sheet constituting a case of a travel bag, the shape of which is made through plastic working such that articles are contained therein, the multilayer sheet having elastically restoring power and including: a first fabric that includes a fabric configured by coupling of fibers and has multiple through-holes penetrating the fabric; a first resin laminated on the first fabric and absorbed and coated on a surface of the first fabric; and a second resin laminated on the first fabric from a side opposite to the first resin, absorbed and coated on the surface of the first fabric, and coupled to the first resin via the through-holes.

The multilayer sheet according to the present disclosure may include: a second fabric that includes a fabric configured by coupling of fibers and has multiple through-holes penetrating the fabric, the second fabric being laminated on the first resin from a side opposite to the first fabric; and a third fabric that includes a fabric configured by coupling of fibers and has multiple through-holes penetrating the fabric, the third fabric being laminated on the second resin from the side opposite to the first fabric.

In connection with the multilayer sheet according to the present disclosure, the first fabric may be made of a woven material, the first fabric, the first resin, and the second resin may be made of polypropylene, and at least one of the first resin and the second resin may be configured to be transparent.

According to the present disclosure, the through-holes may have a width of 0.5-20mm.

In accordance with another aspect of the present disclosure, there is provided a case of a travel bag including the above-mentioned multilayer sheet configured by press working.

In accordance with another aspect of the present disclosure, there is provided a case manufacturing device for manufacturing a case of a travel bag, the shape of which is made through plastic working such that articles are contained therein, the travel bag having elastically restoring power, the case manufacturing device including: a first fabric supply portion configured to continuously supply a first fabric that includes a fabric configured by coupling of fibers and has multiple through-holes penetrating the fabric; a first resin supply portion configured to continuously supply a molten first resin in a directly downward direction; a first roller and a second roller rotating in opposite directions while constituting a pair such that the first fabric and the first resin pass between the first roller and the second roller and become laminated on each other; a second resin supply portion configured to continuously supply a molten second resin in a directly downward direction; and a third roller and a fourth roller rotating in opposite directions while constituting a pair such that the first resin, the first fabric, and the second resin pass between the third roller and the fourth roller and become laminated successively, thereby coupling and combining the first resin and the second resin via the through-holes.

The first roller may be configured to directly contact the first resin; the second roller may be configured to directly contact the first fabric; the third roller may be configured to directly contact the first resin laminated on the first fabric; the fourth roller is configured to directly contact the second resin; and the first roller, the second roller, the third roller, and the fourth roller may be continuously arranged in a row.

The case manufacturing device according to the present disclosure may further include a fifth roller arranged adjacent to the fourth roller and configured to rotate in the opposite direction to the fourth roller. The surface temperature of the second roller may be higher than the surface temperature of the first roller. The surface temperature of the third roller and the fourth roller may be higher than the surface of the second roller. The surface temperature of the fifth roller may be higher than the surface temperature of the third roller and the fourth roller.

The case manufacturing device according to the present disclosure may further include a second fabric supply portion configured to continuously supply a second fabric that includes a fabric configured by coupling of fibers and has multiple through-holes penetrating the fabric. The first roller and the second roller may be configured such that the second fabric, the first resin, and the first fabric pass between the first roller and the second roller and become laminated successively.

The case manufacturing device according to the present disclosure may further include a third fabric supply portion configured to continuously supply a third fabric that includes a fabric configured by coupling of fibers and has multiple through-holes penetrating the fabric. Third roller and the fourth roller may be configured such that the second fabric, the first resin, the first fabric, the second resin, and the third fabric between the third roller and the fourth roller and become laminated successively.

The case manufacturing device according to the present disclosure may include: a sheet clamp configured to hold an edge of a multilayer sheet including the first resin, the first fabric, and the second resin after passing through the third roller and the fourth roller; a preheater having multiple slots into which the sheet clamp is inserted, the preheater being configured such that a hot wind is supplied and circulated therein; and a molding machine configured to press-work the multilayer sheet preheated through the preheater. The slots may be arranged to be spaced apart from each other in a leftward/rightward direction.

### Advantageous Effects

As described above, according to the present disclosure, the multilayer sheet includes a first resin, a first fabric, and a second resin. The first resin, the first fabric, and the second resin are made of polypropylene. The first resin and/or the second resin are configured to be transparent. Accordingly, the first fabric, the first resin, and the second resin can be coupled tightly, and the compactness and strength of the multilayer sheet can be maximized. The unique color of the first fabric can be seen from the outside through the first resin and/or the second resin, making it unnecessary to mix or apply a master batch in a normal extrusion type such that a color is exhibited.

Moreover, according to the present disclosure, the first fabric is positioned at the center of the multilayer sheet, and the first resin and the second resin are coated and positioned on both sides of the first fabric. This advantageously increases the tensile strength and impact strength of the entire multilayer sheet to a large extent. In addition, when the first resin and/or the second resin are configured to be transparent, the aesthetic appearance unique to the first fabric (the texture type, pattern, and the like specific to the fabric resulting from interweaving of a warp and a weft) and the naturalness thereof can be directly seen from and embedded in the case. It is also possible to provide a travel bag with an excellent quality even if the manufacturing cost and manufacturing process are reduced.

In addition, according to the present disclosure, the first resin, the first fabric, and the second resin are all made of the same polypropylene such that, compared with conventional travel bags made of polycarbonate (PC), acrylonitrile butadiene styrene (ABS), and the like, the product price can be reduced substantially, there is no need to add a separate impact resistance enhancer in order to increase the impact strength and the tensile strength, and no master batch needs to be applied. This provides a substantial advantage in terms of mass production and industrial applicability, and, since the weight can be reduced substantially, the user convenience and bag operability (mobility or the like) can be maximized.

Moreover, according to the present disclosure, the multilayer sheet has a first fabric positioned between the first resin and the second resin, thereby constituting a multilayered structure. This substantially lowers the possibility that the multilayer sheet or the case will be torn by an external impact. In addition, the excellent elastically restoring power guarantees that, even if creased or recessed, the same can instantly return to the original condition. Furthermore, the possibility that whitening marks will be formed can be reduced substantially.

In addition, according to the present disclosure, it is possible to provide a case manufacturing device capable of manufacturing a multilayer sheet and a case of a travel bag, which have very excellent compactness, tensile strength, and impact strength.

### Brief Description of the Drawings

FIG. 1 is a perspective view of a travel bag according to the present disclosure;
FIG. 2 schematically illustrates a partial configuration of a case manufacturing device according to the present disclosure;
FIG. 3 is an exploded perspective view schematically illustrating a multilayer sheet according to the present disclosure;
FIG. 4 schematically illustrates a partial configuration of a case manufacturing device according to another embodiment of the present disclosure;
FIG. 5 is an exploded perspective view schematically illustrating a multilayer sheet according to another embodiment of the present disclosure;
FIG. 6 is an exploded perspective view schematically illustrating a multilayer sheet according to still another embodiment of the present disclosure;
FIG. 7 schematically illustrates a partial configuration of a case manufacturing device according to the present disclosure;

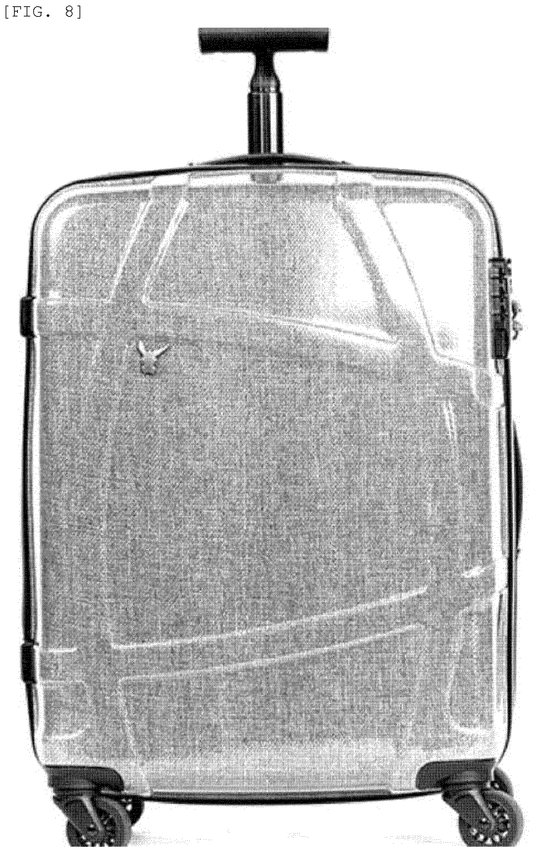

FIG. 8 is a photograph of a travel bag according to the present disclosure; and

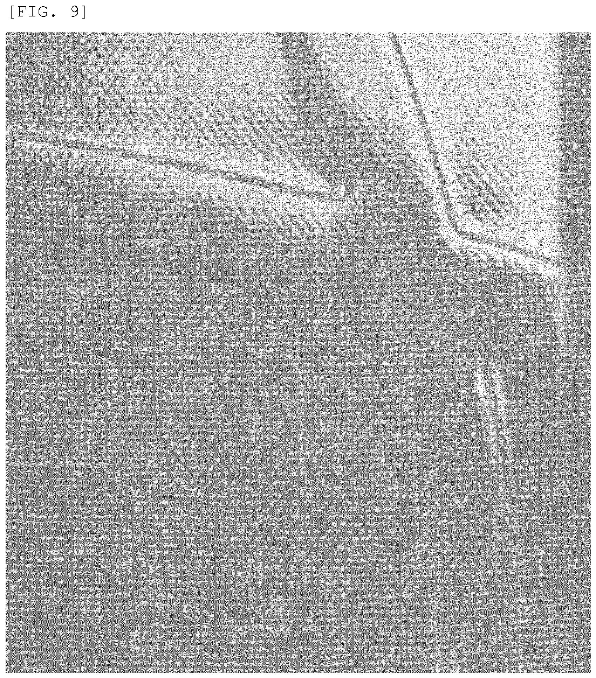

FIG. 9 is a magnified photograph of the surface of the case of the travel bag illustrated in FIG. 8.

### Mode for Carrying Out the Invention

Hereinafter, preferred embodiments of the present disclosure will be described in detail with reference to the accompanying drawings. It is to be noted, however, that, in describing the present disclosure, detailed descriptions of already known functions or configurations will be omitted to clarify the gist of the present disclosure.

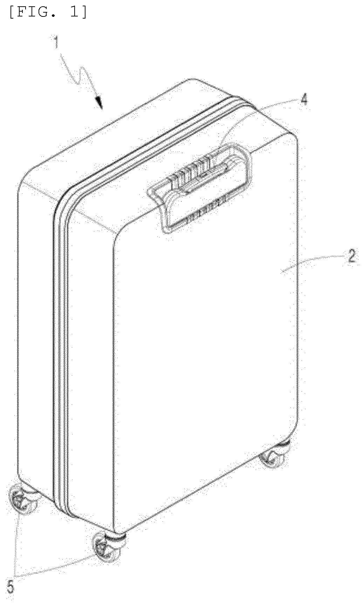

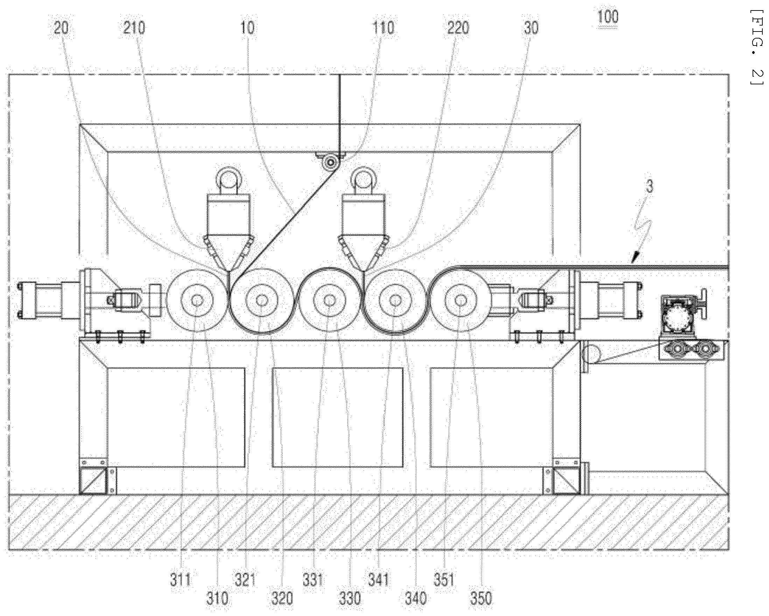

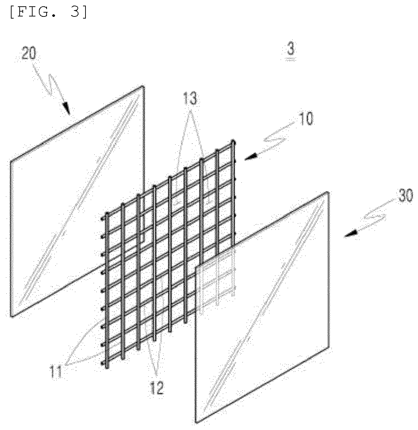

FIG. 1 is a perspective view of a travel bag 1 according to the present disclosure. FIG. 2 schematically illustrates a partial configuration of a case manufacturing device 100 according to the present disclosure. FIG. 3 is an exploded perspective view schematically illustrating a multilayer sheet 3 according to the present disclosure.

It is to be noted that, although the multilayer sheet 3 is expressed in line type in FIG. 2, the multilayer sheet 3 has a width in a direction parallel with the rotating shafts 311, 321, 331, 341, and 351 of respective rollers 310, 320, 330, 340, and 350.

FIG. 3 is for the purpose of illustrating the laminated configuration of the multilayer sheet 3. The first fabric 10, the first resin 20, and the second resin 30 may have forms different from those illustrated in FIG. 3, and may also have sizes larger than those illustrated in FIG. 3.

The case 2 of the travel bag 1 according to the present disclosure (hereinafter, simply referred to as the case 2) is shaped such that articles can be contained therein. As illustrated in FIG. 1, a handle 4, casters 5, and the like may be coupled to the case 2, thereby configuring a travel bag 1 in a complete form.

The case 2 may have various forms and sizes as long as articles can be contained therein. As in the case of a conventional travel bag, the case 2 may include two separate parts, the edges of which are coupled to each other by a zipper or the like. In this case, the two parts of the case 2, constituting a pair, are separately manufactured and then assembled.

As will be described later, a pre-molded multilayer sheet 3 is subjected to plastic working through plastic molding such that the form of the case 2 is made. The multilayer sheet 3 is configured in a flat plate type, and the case 2 is variously shaped to be curved or bent according to the mold for pressing molding.

The basic structure of the multilayer sheet 3 according to the present disclosure will now be described.

The multilayer sheet 3 according to the present disclosure refers to a multilayer sheet 3 that constitutes the case 2 of a travel bag in which articles are contained. The multilayer sheet 3 basically includes a first fabric 10, a first resin 20, and a second resin 30.

The first fabric 10 is formed by coupling of fibers, and has multiple through-holes 13 that penetrate the fabric. Particularly, the first fabric 10 is configured in a thin cloth type and has through-holes 13 that penetrate the same from one surface to the other surface thereof. Such through-holes 13 are repeatedly arranged throughout the entire area of the first fabric 10.

The first fabric 10 according to the present disclosure may be made of a woven material, a knitted material, a non-woven fabric, or a combination thereof. Particularly, the first fabric 10 is preferably made of a woven material.

When the first fabric 10 is made of a woven material, a warp 11 (the warp 11 itself may be made of a combination of multiple fiber strands) and a weft 12 (the weft 12 itself may be made of a combination of multiple fiber strands) are woven to repeatedly intersect one above the other, as fibers that constitute the first fabric 10. Accordingly, the warp 11 and the weft 12 form a lattice shape, which is repeatedly penetrated by holes (through-holes 13).

In this case, the width of the through-holes 13 (the length of one side of each through-hole when the first fabric 10 constitutes a lattice) may be 0.5-20mm. Particularly, the width is preferably 1-3mm.

The first fabric 10 may be made of a natural fiber, a synthetic fiber, or a combination thereof, but is preferably made of a synthetic fiber. Particularly, the first fabric 10 is made of a polypropylene fiber.

The first resin 20 is laminated on the first fiber 10 from one side surface of the first fabric 10, and is forced against and coupled to the first fabric 10.

The first resin 20 may be made of a thermoplastic resin. Particularly, the first resin 20 is preferably made of polypropylene. The first resin 20, made of the same material as that of the first fabric 10 as such, can be coupled to the first fabric 10 more tightly. According to the present disclosure, furthermore, the first fabric 10 is made of a combination of multiple fibers such that particles of the first resin 20 infiltrate between fiber strands that constitute the first fabric 10, thereby resulting in firm coupling between the two.

Meanwhile, the first resin 20 may be configured to be transparent.

The second resin 30 is laminated on the first fiber 10 from the opposite side of the first resin 20, and is forced against and coupled to the first fabric 10. In this case, the first resin 20 and the second resin 30 are coupled to each other via the through-holes 13 of the first fabric 10.

The second resin 30 may be made of a thermoplastic resin and, particularly, is preferably made of polypropylene. The second resin 30, made of the same material as that of the first fabric 10 and that of the first resin 20 as such, can be coupled to the first fabric 10 and to the first resin 20 more tightly. According to the present disclosure, furthermore, the first fabric 10 is made of a combination of multiple fibers such that particles of the second resin 30 infiltrate between fiber strands that constitute the first fabric 10, thereby resulting in firm coupling between the two. Moreover, the second resin 30 contacts and is coupled to the first resin 20 via the through-holes of the first fabric 10 such that the first resin 20, the first fabric 10, and the second resin 30 are coupled in a very stable and robust manner.

Meanwhile, the second resin 30 may be configured to be transparent.

As described above, the multilayer sheet 3 according to the present disclosure has the following advantages. The same includes a first resin 20, a first fabric 10, and a second resin 30. The first resin 20, the first fabric 10, and the second resin 30 are made of polypropylene. The first resin 20 and/or the second resin 30 are configured to be transparent. Accordingly, the first fabric 10, the first resin 20, and the second resin 30 can be coupled tightly, and the compactness and strength of the multilayer sheet 3 can be maximized. The unique color of the first fabric 10 appears through the first resin 20 and/or the second resin 30, making it unnecessary to mix or apply a master batch in a normal extrusion type such that a color is exhibited.

Moreover, the first fabric 10 is positioned at the center of the multilayer sheet 3, and the first resin 20 and the second resin 30 are coated and positioned on both sides of the first fabric 10. This advantageously increases the tensile strength and impact strength of the entire multilayer sheet 3 to a large extent. In addition, when the first resin 20 and/or the second resin 30 are configured to be transparent, the aesthetic appearance unique to the first fabric 10 (the texture type, pattern, and the like specific to the fabric resulting from interweaving of a warp and a weft) and the naturalness thereof can be directly seen from and embedded in the case. It is also possible to provide a travel bag with a high quality even if the manufacturing cost and manufacturing process are reduced.

In addition, the first resin 20, the first fabric 10, and the second resin 30 are all made of the same polypropylene such that, compared with conventional travel bags simply made of polycarbonate (PC), acrylonitrile butadiene styrene (ABS), and the like, the product price can be reduced substantially, there is no need to add a separate impact resistance enhancer in order to increase the impact strength and tensile strength, and no master batch needs to be applied. This provides a substantial advantage in terms of mass production and industrial applicability, and, since the weight can be reduced substantially, the user convenience and bag operability (mobility or the like) can be maximized.

Moreover, conventional travel bags made of PC and the like have a problem in that the same are easily creased, torn, or recessed by impacts and are then impossible to restore. Even if restored, traces of fracture such as white lines (whitening) or crease marks are left permanently. In contrast, the multilayer sheet 3 according to the present disclosure has a first fabric 10 positioned between the first resin 20 and the second resin 30, thereby constituting a multilayered structure. This substantially lowers the possibility that the multilayer sheet 3 or the case will be torn by an external impact. In addition, the excellent elastically restoring power guarantees that, even if creased or recessed, the same can instantly return to the original condition. Furthermore, the possibility that whitening marks will be formed can be reduced substantially.

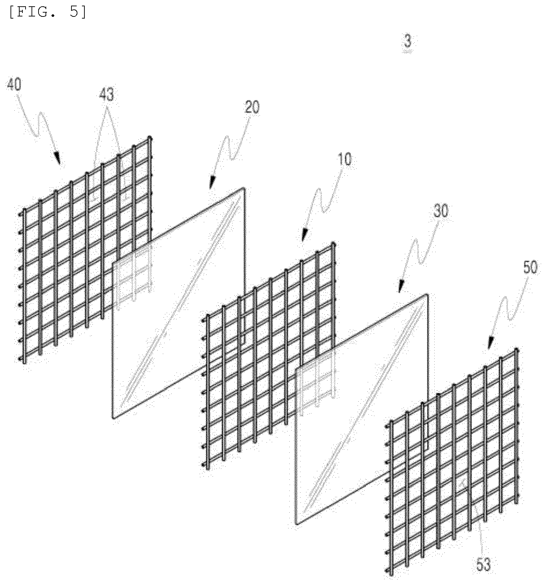

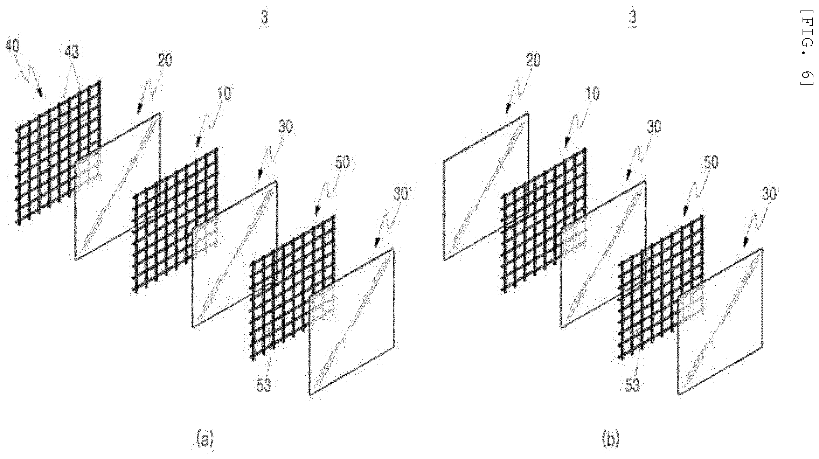

The multilayer sheet 3 according to the present disclosure may solely include a first fabric 10, a first resin 20, and a second resin 30 as illustrated in FIG. 3. The multilayer sheet 3 may further include a second fabric 40 and/or a third fabric 50 as illustrated in FIG. 5 and FIG. 6. Alternatively, the multilayer sheet 3 may further include a separate resin layer 60.

The case manufacturing device 100 according to the present disclosure is a device for manufacturing a case 2 finally. The above-mentioned multilayer sheet 3 is also made in the process of manufacturing a case 2 by the case manufacturing device 100.

The case manufacturing device 100 includes a first fabric supply portion 110, a first resin supply portion 210, a first roller 310, a second roller 320, a second resin supply portion 220, a third roller 330, and a fourth roller 340. In addition, the case manufacturing device 100 may further include a fifth roller 350.

The first fabric supply portion 110 is configured to continuously supply a first fabric 10.

The first fabric 10 is manufactured in a fabric type and supplied to the case manufacturing device 100 according to the present disclosure. It could be understood that a separate drum may be provided before the first fabric supply portion 110 such that the first fabric 10 is wound around the same.

The first fabric 10 supplied from the first fabric supply portion 110 is continuously supplied between the first roller 310 and the second roller 320, and is particularly supplied such that the same is forced against the outer peripheral surface of the second roller 320.

The first resin supply portion 210 is configured in an extruder type and discharges a first resin 20, which has been heated and melted, in the directly downward direction such that the discharged first resin 20 is supplied between the first roller 310 and the second roller 320. The first resin supply portion 210 has a nozzle positioned right above the boundary between the first roller 310 and the second roller 320 such that the first resin 20, which is discharged through the nozzle of the first resin supply portion 210, is provided by gravity between the first roller 310 and the second roller 320.

The first resin supply portion 210 may be configured to have a predetermined width in a direction parallel with the rotating shafts 311, 321, 331, 341, and 351 of respective rollers 310, 320, 330, 340, and 350, and the nozzle of the first resin supply portion 210 may also be configured to have a predetermined width in a direction parallel with the rotating shafts 311, 321, 331, 341, and 351 of respective rollers 310, 320, 330, 340, and 350.

The first roller 310 and the second roller 320 are configured in conventional roller types, constitute a pair, and rotate in the opposite directions. The rotating shaft 311 of the first roller 310 and the rotating shaft 321 of the second roller 320 are parallel with each other. When the first roller 310 rotates clockwise with reference to FIG. 2, the second roller 320 rotates counterclockwise.

The first roller 310 and the second roller 320 are not completely forced against each other, but are spaced apart such that a predetermined gap is formed therebetween. The first fabric 10 and the first resin 20 are laminated on each other and pass through the gap, thereby being coupled to each other.

Assuming that the thickness of the first resin 20 discharged from the nozzle of the first resin supply portion 210 if t1, the thickness of the first fabric 10 supplied from the first fabric supply portion 110 is t2, and the gap between the first roller 310 and the second roller 320 is t3, t3 is preferably smaller than the sum of t1 and t2.

In addition, the case manufacturing device 100 according to the present disclosure is configured such that the first resin 20 directly contacts the first roller 310, and the first fabric 10 directly contacts the second roller 320. The first resin 20 and the first fabric 10 are coupled to each other while passing through the gap between the first roller 310 and the second roller 320, and are forced against the outer peripheral surface of the second roller 320 in a predetermined range.

The second resin supply portion 220 is configured in an extruder type and discharges a second resin 30, which has been heated and melted, in the directly downward direction such that the discharged second resin 30 is supplied between the third roller 330 and the fourth roller 340. The second resin supply portion 220 has a nozzle positioned right above the boundary between the third roller 330 and the fourth roller 340 such that the second resin 30, which is discharged through the nozzle of the second resin supply portion 220, is provided by gravity between the third roller 330 and the fourth roller 340.

The second resin supply portion 220 may be configured to have a predetermined width in a direction parallel with the rotating shafts 311, 321, 331, 341, and 351 of respective rollers 310, 320, 330, 340, and 350, and the nozzle of the second resin supply portion 220 may also be configured to have a predetermined width in a direction parallel with the rotating shafts 311, 321, 331, 341, and 351 of respective rollers 310, 320, 330, 340, and 350.

The third roller 330 and the fourth roller 340 are configured in conventional roller types, constitute a pair, and rotate in the opposite directions. The rotating shaft 331 of the third roller 330 and the rotating shaft 341 of the fourth roller 340 are parallel with each other. When the third roller 330 rotates clockwise with reference to FIG. 2, the fourth roller 340 rotates counterclockwise.

The third roller 330 and the fourth roller 340 are not completely forced against each other, but are spaced apart such that a predetermined gap is formed therebetween. The second resin 30 is additionally laminated on the first resin 20 and the first fabric 10, which have been laminated on each other, while passing through the gap and thus become coupled to each other.

Assuming that the thickness of the first resin 20 discharged from the nozzle of the first resin supply portion 210 is t1, the thickness of the first fabric 10 supplied from the first fabric supply portion 110 is t2, the thickness of the second resin 30 discharged from the nozzle of the second resin supply portion 220 is t4, and the gap between the third roller 330 and the fourth roller 340 is t5, t5 is preferably smaller than the sum of t1, t2, and t4.

In addition, the case manufacturing device 100 according to the present disclosure is configured such that the first resin 20 coupled to the first fabric 10 directly contacts the third roller 330, and the second resin 30 directly contacts the fourth roller 340. The first resin 20, the first fabric 10, and the second resin 30 are coupled to one another while passing through the gap between the third roller 330 and the fourth roller 340, and are forced against the outer peripheral surface of the fourth roller 340 in a predetermined range.

Moreover, the first resin 20, the first fabric 10, and the second resin 30 are successively laminated while passing through the third roller 330 and the fourth roller 340. In this process, the first resin 20 and the second resin 30 are strongly coupled to each other via the through-holes 13 of the first fabric 10.

As illustrated in FIG. 2, in connection with the case manufacturing device 100 according to the present disclosure, the first roller 310, the second roller 320, the third roller 330, and the fourth roller 340 are preferably arranged continuously in a row.

In this case, the first resin 20 and the first fabric 10, which have been laminated on each other, pass between the second roller 320 and the third roller 330, and the gap between the second roller 320 and the third roller 330 is preferably larger than or equal to the gap between the first roller 310 and the second roller 320.

The fifth roller 350 is configured in a conventional roller type and is arranged adjacent to the fourth roller 340 so as to rotate in the opposite direction to that of the fourth roller 340. The rotating shaft 351 of the fifth roller 350 and the rotating shaft 341 of the fourth roller 340 are parallel with each other. When the fourth roller 340 rotates counterclockwise with reference to FIG. 2, the fifth roller 350 rotates clockwise.

In connection with the case manufacturing device 100 according to the present disclosure, the first roller 310, the second roller 320, the third roller 330, the fourth roller 340, and the fifth roller 350 are preferably arranged continuously in a row. Provision of the fifth roller 350 guarantees that the first resin 20, the first fabric 10, and the second resin 330, which have been laminated on one another, are sufficiently forced against the outer peripheral surface of the fourth roller 340. In this process, the first resin 20, the first fabric 10, and the second resin 30 are tightly couple to one another.

In connection with the case manufacturing device 100 according to the present disclosure, respective surfaces of the first roller 310, the second roller 320, the third roller 330, the fourth roller 340, and the fifth roller 350 are preferably heated such that each can maintain a predetermined level of temperature, in order to facilitate coupling between the first resin 20 and the second resin 30, which have been melted, and the first fabric 10. To this end, respective rollers 310, 320, 330, 340, and 350 may have heating wires or the like provided therein.

In addition, the case manufacturing device 100 according to the present disclosure is preferably configured such that the surface temperature of the second roller 320 is higher than the surface temperature of the first roller 310, the surface temperature of the third roller 330 and the fourth roller 340 is higher than the surface temperature of the second roller 320, and the surface temperature of the fifth roller 350 is higher than the surface temperature of the third roller 330 and the fourth roller 340.

For example, the first roller 310 preferably has a surface temperature of about 70°C; the second roller 320 preferably has a surface temperature of about 75°C; the third roller 330 and the fourth roller 340 preferably have a surface temperature of about 80°C; and the fifth roller 350 preferably has a surface temperature of about 90°C. In addition, the temperatures preferably increase gradually along the direction in which the multilayer sheet 3 is manufactured (the direction in which the first fabric 10 moves).

Such a configuration for a gradual temperature increase guarantees that the first resin 20, the first fabric 10, and the second resin 30 can maintain at least predetermined levels of temperatures without substantial temperature decreases while passing through the first roller 310, the second roller 320, the third roller 330, the fourth roller 340, and the fifth roller 350. As a result, the first resin 20, the first fabric 10, and the second resin 30 can be stably coupled to one another (unwanted hardening of the first resin 20 and the second resin 30 can be prevented). In addition, since the surface temperature of the second roller 320 is slightly higher than the surface temperature of the first roller 310, a temperature loss resulting from the thickness of the first fabric 10 can be compensated for such that even ranges of temperatures can act on both surfaces of the first resin 20.

Meanwhile, at least one of the first resin 20 and the second resin 30 may be configured to be transparent. In such a case, the color, texture, and the like of the first fabric 10 can be seen from the outside through the first resin 20 and/or the second resin 30. Accordingly, the travel bag 1 can be endowed with a color expression without a separate process for coloring or the like after the multilayer sheet 3 is manufactured, thereby reducing the manufacturing process and cost, and the shape of the first fabric 10 (for example, the woven shape) is naturally expressed, thereby improving the completeness of the product (travel bag 1).

As described above, in connection with the case manufacturing device 100 according to the present disclosure, the first resin 20, the first fabric 10, and the second resin 30 are coupled to one another while passing through the first roller 310, the second roller 320, the third roller 330, and the fourth roller (as well as the fifth roller 350), thereby manufacturing a multilayer sheet 3.

After passing through the fourth roller 340 and the fifth roller 350, the multilayer sheet 3 is transferred and cooled, and is then cut into a predetermined size suitable for manufacture of each case 2.

As described above, in connection with manufacturing a case 2 of a travel bag 1 according to the present disclosure, the first resin 20, the first fabric 10, and the second resin 30 are laminated and coupled to one another, and the first resin 20 and the second resin 30 are coupled to each other via the through-holes 13 of the first fabric 10. Accordingly, the first resin 20 and the second resin 30 are evenly absorbed and coated on the surface of the first fabric 10, and the first resin 20, the first fabric 10, and the second resin 30 are tightly coupled to one another. As a result, the unique color of the first fabric 10 can be seen from the outside through the first resin 20 and/or the second resin 30; it is possible to manufacture a case 2 having very excellent compactness, tensile strength, and impact strength; and it is possible to provide a multilayer sheet 3 and a case 2.

In addition, inclusion of the first fabric 10 made of a combination of fibers makes it possible to form a multilayer sheet 3 and a case 2, the overall tensile strength and impact strength are additionally improved. As will be described later, the ratio of fracture during plastic deformation can be reduced in the process of press-working the multilayer sheet 3 to form a case 2, and the ratio of defective cases 2 manufactured can be decreased.

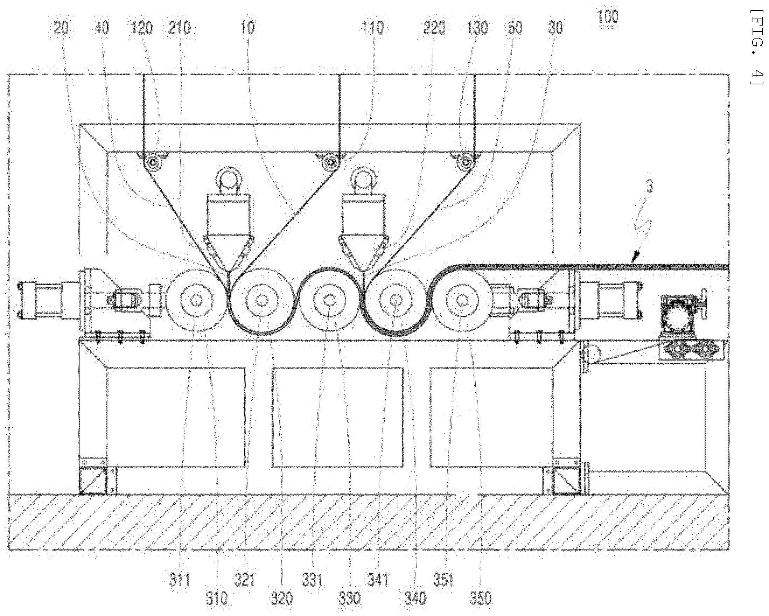

FIG. 4 schematically illustrates a partial configuration of a case manufacturing device 100 according to another embodiment of the present disclosure. FIG. 5 is an exploded perspective view schematically illustrating a multilayer sheet 3 according to another embodiment of the present disclosure. FIG. 6 is an exploded perspective view schematically illustrating a multilayer sheet 3 according to still another embodiment of the present disclosure.

It is to be noted that, although the multilayer sheet 3 is expressed in a line type in FIG. 4, the multilayer sheet 3 has a width in a direction parallel with the rotating shafts 311, 321, 331, 341, and 351 of respective rollers 310, 320, 330, 340, and 350.

FIG. 5 is for the purpose of illustrating the laminated configuration of the multilayer sheet 3. The first fabric 10, the second fabric 40, the third fabric 50, the first resin 20, and the second resin 30 may be configured in forms different from those illustrated in FIG. 5, and may also have sizes larger than those illustrated in FIG. 5.

The case manufacturing device 100 according to the present disclosure includes a first fabric supply portion 110, a first resin supply portion 210, a first roller 310, a second roller 320, a second resin supply portion 220, a third roller 330, a fourth roller 340, and a fifth roller 350, as described above. In addition, the case manufacturing device 100 may further include a second fabric supply portion 120 and a third fabric supply portion 130.

Unless specified otherwise, the first fabric supply portion 110, the first resin supply portion 210, the first roller 310, the second roller 320, the second resin supply portion 220, the third roller 330, the fourth roller 340, the fifth roller 350, the first fabric 10, the first resin 20, and the second resin 30 may be configured in the same manner as described with reference to FIG. 2 and FIG. 3.

The second fabric supply portion 120 is configured to continuously supply a second fabric 40. The second fabric 40 is formed by coupling of fibers, and has multiple through-holes 43 that penetrate the fabric. Particularly, the second fabric 40 is configured in a thin cloth type and has through-holes 43 that penetrate the same from one surface to the other surface thereof. Such through-holes 43 are repeatedly arranged throughout the entire area of the second fabric 40.

The second fabric 40 according to the present disclosure may be made of a woven material, a knitted material, a non-woven fabric, or a combination thereof. Particularly, the second fabric 40 is preferably made of a woven material.

The material, size, and shape of the second fabric 40 may differ from those of the first fabric 10, but are preferably configured in the same manner. Accordingly, detailed descriptions of the second fabric 40 identical to those of the first fabric 10 will be omitted herein.

The second fabric 40 supplied from the second fabric supply portion 120 is continuously supplied between the first roller 310 and the second roller 320 and, after passing between the first roller 310 and the second roller 320, moves so as to surround the outer peripheral surface of the second roller 320.

It is to be noted that the case manufacturing device 100 according to the present disclosure is configured such that, in connection with supplying the second fabric 40 between the first roller 310 and the second roller 320, the second fabric 40 is positioned opposite the first fabric 10 with reference to the first resin 20 such that the second fabric 40 directly contacts the outer peripheral surface of the first roller 310, and the first resin 20 is coupled to the second fabric 40 and to the first fabric 10 so as to be interposed between the second fabric 40 and the first fabric 10.

Assuming that the thickness of the first resin 20 discharged from the nozzle of the first resin supply portion 210 is t1, the thickness of the first fabric 10 supplied from the first fabric supply portion 110 is t2, the thickness of the second fabric 40 supplied from the second fabric supply portion 120 is t6, and the gap between the first roller 310 and the second roller 320 is t3', t3' is preferably smaller than the sum of t1, t2 and t6.

The coupling between the second fabric 40 and the first resin 20 proceeds in the same manner as that of the coupling between the first fabric 10 and the first resin 20 described above.

The second fabric 40, the first resin 20, and the first fabric 10 are successively laminated and coupled while passing through the gap between the first roller 310 and the second roller 320, and the same then move in a predetermined range while being forced against the outer peripheral surface of the second roller 320.

In addition, the surface temperature of the second roller 320 is preferably identical to the surface temperature of the first roller 310. For example, the surface temperature of the first roller 310 and that of the second roller 320 are preferably about 70°C.

The third fabric supply portion 130 is configured to continuously supply a third fabric 50. The third fabric 50 is formed by coupling of fibers, and has multiple through-holes 53 that penetrate the fabric. Particularly, the third fabric 50 is configured in a thin cloth type and has through-holes 53 that penetrate the same from one surface to the other surface thereof. Such through-holes 53 are repeatedly arranged throughout the entire area of the third fabric 50.

The third fabric 50 according to the present disclosure may be made of a woven material, a knitted material, a non-woven fabric, or a combination thereof. Particularly, the third fabric 50 is preferably made of a woven material.

The material, size, and shape of the third fabric 50 may differ from those of the first fabric 10, but are preferably configured in the same manner. Accordingly, detailed descriptions of the third fabric 50 identical to those of the first fabric 10 will be omitted herein.

The third fabric 50 supplied from the third fabric supply portion 130 is continuously supplied between the third roller 330 and the fourth roller 340 and, after passing between the third roller 330 and the fourth roller 340, moves so as to surround the outer peripheral surface of the fourth roller 340.

It is to be noted that the case manufacturing device 100 according to the present disclosure is configured such that, in connection with supplying the third fabric 50 between the third roller 330 and the fourth roller 340, the third fabric 50 is positioned opposite the first fabric 10 with reference to the second resin 30 such that the third fabric 50 directly contacts the outer peripheral surface of the fourth roller 340, and the second resin 30 is coupled to the first fabric 30 and to the third fabric 50 so as to be interposed between the first fabric 10 and the third fabric 50.

Assuming that the thickness of the first resin 20 discharged from the nozzle of the first resin supply portion 210 is t1, the thickness of the fabric 10 supplied from the first fabric supply portion 110 is t2, the thickness of the second resin 30 discharged from the nozzle of the second resin supply portion 220 is t4, the thickness of the second fabric 40 supplied from the second fabric supply portion 120 is t6, the thickness of the third fabric 50 supplied from the third fabric supply portion 130 is t7, and the gap between the third roller 330 and the fourth roller 340 is t5', t5' is preferably smaller than the sum of t1, t2, t4, t6, and t7.

The coupling between the third fabric 50 and the second resin 30 proceeds in the same manner as that of the coupling between the first fabric 10 and the second resin 30 described above.

The second fabric 40, the first resin 20, the first fabric 10, the second resin 30, and the third fabric 50 are successively laminated and coupled while passing through the gap between the third roller 330 and the fourth roller 340, and the same then move in a predetermined range while being forced against the outer peripheral surface of the fourth roller 340.

In connection with the case manufacturing device 100 according to the present disclosure, as described above, the second fabric 40, the first resin 20, the first fabric 10, and the second resin 30 are coupled to one another while passing through the first roller 310, the second roller 320, the third roller 330, and the fourth roller 340 (as well as the fifth roller 350), thereby manufacturing a multilayer sheet 3.

In addition, the first resin 20, the first fabric 10, the second resin 30, and the third fabric 50 are coupled to one another while passing through the first roller 310, the second roller 320, the third roller 330, and the fourth roller 340 (as well as the fifth roller 350), thereby manufacturing a multilayer sheet 3.

In addition, the second fabric 40, the first resin 20, the first fabric 10, the second resin 30, and the third fabric 50 are coupled to one another while passing through the first roller 310, the second roller 320, the third roller 330, and the fourth roller 340 (as well as the fifth roller 350), thereby manufacturing a multilayer sheet 3.

As such, the multilayer sheet 3 according to the present disclosure further includes a second fabric 40 and/or a third fabric 50. Accordingly, it is possible to form a multilayer sheet 3, a case 2, and a travel bag 1 that are more robust, and to form a product having excellent tensile strength and impact strength.

In addition, when the first resin 20 and the second resin 30 are configured to be transparent, the second fabric 40 and/or the third fabric 50 can overlap with the first fabric 10 and exhibit a unique aesthetic appearance. This makes it possible to form a multilayer sheet 3, a case 2, and a travel bag 1 with aesthetic appearances.

After passing through the fourth roller 340 and the fifth roller 350, the multilayer sheet 3 is transferred and cooled, and is then cut into a predetermined size suitable for manufacture of each case 2.

Meanwhile, the case manufacturing device 100 according to the present disclosure may further include a separate resin supply portion (not illustrated) in addition to the first resin supply portion 210 and the second resin supply portion 220. A multilayer sheet 3 manufactured accordingly may further include a separate resin layer 60 as illustrated in FIG. 6.

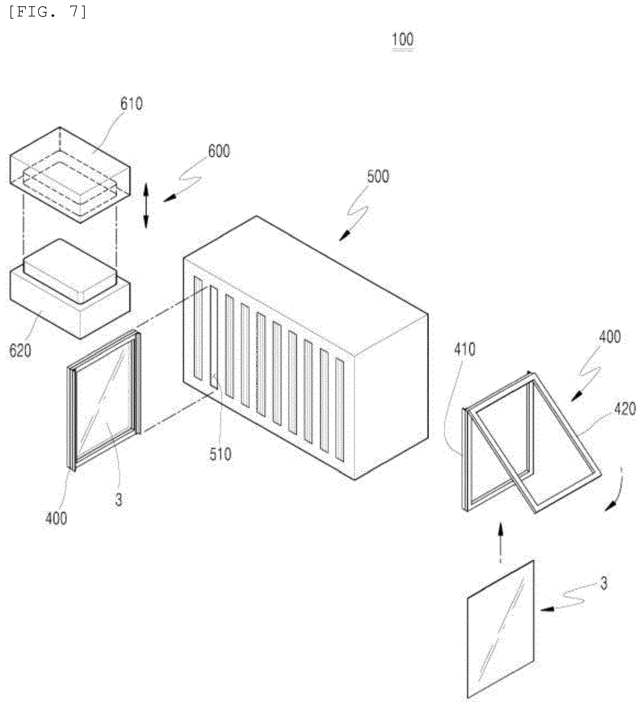

FIG. 7 schematically illustrates a partial configuration of a case manufacturing device 100 according to the present disclosure.

The case manufacturing device 100 according to the present disclosure may further include a sheet clamp 400, a preheater 500, and a molding machine 600.

After a multilayer sheet 3 is manufactured, a series of continuous multilayer sheets 3 are cooled and then cut into predetermined sizes, respectively. The multilayer sheets 3 that have been cut into predetermined sizes are molded into cases 2, respectively. The multilayer sheets 3 are preferably cut in the shape of quadrangular plates.

The sheet clamp 400 is configured to hold the edge of a multilayer sheet 3 and has the shape of a quadrangular frame.

The sheet clamp 400 may be divided into a first clamp 410 and a second clamp 420. The first clamp 410 and the second clamp 420 may be configured as quadrangular frames having the same size and shape, and may be coupled to each other so as to support the edge of a multilayer sheet 3 that has been cut in a quadrangular shape (the edge of a quadrangular multilayer sheet 3 is interposed between the first clamp 410 and the second clamp 420).

One corner of each of the first clamp 410 and the second clamp 420 may be hinge-coupled.

The preheater 500 has multiple slots 510 into which the sheet clamp 400 is inserted, and is configured such that a hot wind is supplied and circulated therein. Particularly, the preheater 500 is configured such that multiple multilayer sheets 3 held by sheet clamps 400 can be inserted therein.

The multiple slots 510 of the preheater 500 are arranged to be spaced apart from each other in the leftward/rightward direction, and respective slots 510 are preferably elongated in the vertical direction. This guarantees that a hot wind efficiently circulates inside the preheater 500.

In order to circulate a hot wind inside the preheater 500, a boiler and a blower may be formed inside the preheater 500, thereby steadily heating multiple sheet clamps 400 inserted into the preheater 500.

The multilayer sheets 3 heated inside the preheater 500 are again withdrawn from the preheater 500 while being held by the sheet clamps 400, and are then molded in the shape of cases 2 by the molding machine 600.

The molding machine 600 is configured in a conventional press molding machine type, and may include a first mold 610 and a second mold 620 combined with each other with a multilayer sheet 3 interposed between the same.

Although specific embodiments of the present disclosure have previously been described and illustrated, it would be obvious to a person skilled in the art that the present disclosure is not limited to the described embodiments, and could be variously changed and modified without deviating from the idea and scope of the present disclosure. Therefore, such examples of changes or modifications are not to be understood individually from the technical idea or viewpoint of the present disclosure, and modified embodiments fall into the claims of the present disclosure.

### Industrial Applicability

A multilayer sheet including a fabric and a resin, a case of a travel bag including the sheet, and a device for manufacturing the same, according to the present disclosure, are for the purpose of manufacturing a travel bag in a card case type, the strength of which can be further improved. Not only the tensile strength and impact strength of the entire multilayer sheet can be improved substantially and become advantageous, the aesthetic appearance and naturalness unique to the first fabric can be directly seen from and embedded in the manufactured case. It is possible to provide a travel bag with an excellent quality even if the manufacturing cost and manufacturing process are reduced. Considering this, the present disclosure is beyond the limits of conventional technologies and, besides uses regarding relevant technologies, devices to which the present disclosure is applied have a sufficient potential for commercial availability or marketing. It would also be obvious that the present disclosure could be implemented practically. Therefore, the present disclosure has an industrial applicability.

## Claims

1. A multilayer sheet constituting a case of a travel bag, the shape of which is made through plastic working such that articles are contained therein, the multilayer sheet having elastically restoring power and comprising:
a first fabric that comprises a fabric configured by coupling of fibers and has multiple through-holes penetrating the fabric;
a first resin laminated on the first fabric and absorbed and coated on a surface of the first fabric; and
a second resin laminated on the first fabric from a side opposite to the first resin, absorbed and coated on the surface of the first fabric, and coupled to the first resin via the through-holes.

2. The multilayer sheet as claimed in claim 1, comprising:
a second fabric that comprises a fabric configured by coupling of fibers and has multiple through-holes penetrating the fabric, the second fabric being laminated on the first resin from a side opposite to the first fabric; and
a third fabric that comprises a fabric configured by coupling of fibers and has multiple through-holes penetrating the fabric, the third fabric being laminated on the second resin from the side opposite to the first fabric.

3. The multilayer sheet as claimed in claim 1 or 2, wherein the first fabric is made of a woven material, the first fabric, the first resin, and the second resin are made of polypropylene, and at least one of the first resin and the second resin is configured to be transparent.

4. The multilayer sheet as claimed in claim 1 or 2, wherein the through-holes have a width of 0.5-20mm.

5. A case of a travel bag comprising a multilayer sheet as claimed in claim 1 or 2 configured by press working.

6. A case manufacturing device for manufacturing a case of a travel bag, the shape of which is made through plastic working such that articles are contained therein, the travel bag having elastically restoring power, the case manufacturing device comprising:
a first fabric supply portion configured to continuously supply a first fabric that comprises a fabric configured by coupling of fibers and has multiple through-holes penetrating the fabric;
a first resin supply portion configured to continuously supply a molten first resin in a directly downward direction;
a first roller and a second roller rotating in opposite directions while constituting a pair such that the first fabric and the first resin pass between the first roller and the second roller and become laminated on each other;
a second resin supply portion configured to continuously supply a molten second resin in a directly downward direction; and
a third roller and a fourth roller rotating in opposite directions while constituting a pair such that the first resin, the first fabric, and the second resin pass between the third roller and the fourth roller and become laminated successively, thereby coupling and combining the first resin and the second resin via the through-holes.

7. The case manufacturing device as claimed in claim 6, wherein the first roller is configured to directly contact the first resin; the second roller is configured to directly contact the first fabric; the third roller is configured to directly contact the first resin laminated on the first fabric; the fourth roller is configured to directly contact the second resin; and the first roller, the second roller, the third roller, and the fourth roller are continuously arranged in a row.

8. The case manufacturing device as claimed in claim 7, further comprising a fifth roller arranged adjacent to the fourth roller and configured to rotate in the opposite direction to the fourth roller, wherein the surface temperature of the second roller is higher than the surface temperature of the first roller, the surface temperature of the third roller and the fourth roller is higher than the surface of the second roller, and the surface temperature of the fifth roller is higher than the surface temperature of the third roller and the fourth roller.

9. The case manufacturing device as claimed in claim 6, further comprising a second fabric supply portion configured to continuously supply a second fabric that comprises a fabric configured by coupling of fibers and has multiple through-holes penetrating the fabric, wherein the first roller and the second roller are configured such that the second fabric, the first resin, and the first fabric pass between the first roller and the second roller and become laminated successively.

10. The case manufacturing device as claimed in claim 9, further comprising a third fabric supply portion configured to continuously supply a third fabric that comprises a fabric configured by coupling of fibers and has multiple through-holes penetrating the fabric, wherein the third roller and the fourth roller are configured such that the second fabric, the first resin, the first fabric, the second resin, and the third fabric between the third roller and the fourth roller and become laminated successively.

11. The case manufacturing device as claimed in one of claims 6 to 10, comprising:
a sheet clamp configured to hold an edge of a multilayer sheet comprising the first resin, the first fabric, and the second resin after passing through the third roller and the fourth roller;
a preheater having multiple slots into which the sheet clamp is inserted, the preheater being configured such that a hot wind is supplied and circulated therein; and
a molding machine configured to press-work the multilayer sheet preheated through the preheater, wherein
the slots are arranged to be spaced apart from each other in a leftward/rightward direction.
